# EUROPEAN PATENT APPLICATION

(11) **EP 2 012 383 A1**
(43) Date of publication of application: **07.01.2009**
(21) Application number: 07741387.0
(22) Date of filing: 11.04.2007
(51) Int. Cl.: H01M 8/02, H01M 8/10, H01M 8/04

(54) **MEA MEMBER, AND POLYELECTROLYTE FUEL CELL**

(30) Priority: 24.04.2006 JP 2006119343
(71) Applicant: Panasonic Corporation, Kadoma-shi Osaka 571-8501 (JP)
(72) Inventor: KOBAYASHI, Susumu c/o Panasonic Corporation Intellectual Property Rights Operations Company, Osaka-shi, Osaka 540-6207 (JP); HATANO, Susumuc/o Panasonic Corporation Intellectual Property Rights Operations Company, Osaka-shi, Osaka 540-6207 (JP)
(74) Representative: Leinweber & Zimmermann
(86) International application number: PCT/JP2007/057951
(87) International publication number: WO 2007/125751

(57) **Abstract**

An MEA component (7) of the present invention comprises an MEA (5), and a plate-shaped frame member (6) which is provided with an anode gas supply manifold hole (12I), a cathode gas supply manifold hole (13I), a cooling water supply manifold hole (14I), an anode gas discharge manifold hole (12E), a cathode gas discharge manifold hole (13E), and a cooling water discharge manifold hole (14E) which penetrate the frame member (6) in a thickness direction thereof. Water suction portion (14I, 14E) for suctioning water is provided in at least one of a hole wall of the cooling water supply manifold hole (14I) of the frame member (6) and a hole wall of the cooling water discharge manifold hole (14E) of the frame member (6), an evaporation portion (7A, 7C) for evaporating water is provided on at least one main surface of the frame member (6), and a capillary structure (51) is embedded in the frame member (6) to connect the water suction portion (14I, 14E) to the evaporation portion (7A, 7C).

## Description

### Technical Field

The present invention relates to an MEA component to which an MEA is joined, and a polymer electrolyte fuel cell (hereinafter referred to as a PEFC) using the same.

### Background Art

A basic principle of power generation in a PEFC is such that a component of an anode gas and a component of a cathode gas are ionized by a catalytic action and ions are exchanged between the anode gas and the cathode gas through a polymer electrolyte membrane, causing a cell reaction to occur. To this end, the PEFC has a structure in which the polymer electrolyte membrane is exposed to the anode gas and the cathode gas. Specifically, a unit cell (cell) of the PEFC has a structure in which an MEA component to which an MEA (membrane electrode assembly) provided with electrodes on both surfaces of a center region of the polymer electrolyte membrane is joined is sandwiched between a cathode separator provided with a cathode gas passage groove on an inner surface thereof and an anode gas passage groove on an inner surface thereof (hereinafter these separators are collectively referred to as separators). A stack including stacked cells constitutes a main body of the PEFC.

As the polymer electrolyte membrane for use in the cell reaction, conventionally, a fluorine based polymer membrane is typically used. Whereas the fluorine based polymer membrane has a characteristic of high conductivity of hydrogen ions consumed in the cell reaction in a wet state, it significantly degrades the conductivity of the hydrogen ions in a dry state. For this reason, the polymer electrolyte membrane of the PEFC is required to have an appropriate water-containing condition. Generally, a method of preventing drying of the polymer electrolyte membrane by exposing the anode gas humidified and the cathode gas humidified are exposed to the polymer electrolyte membrane is put into practical use.

To humidify the anode gas and the cathode gas, a supply system of these gases includes a humidifier in the conventional power generation system using the PEFC. In addition, in recent years, there has been disclosed a technique in which a humidifier is incorporated into a unit cell of the PEFC, or into a PEFC main body using cell components (see patent documents 1 through 9). By incorporating the humidifier into the PEFC main body, appropriate humidification can be achieved and a reformer in the supply system of the anode gas and the cathode gas may be omitted. Therefore, it is expected to make the configuration of the fuel cell system compact.

Among documents, patent documents 1 to 3 disclose that water in the excess cathode gas and water in the excess anode gas remaining after the cell reaction are used to humidify the anode gas and the cathode gas, respectively. To be specific, these documents disclose that the anode gas and the cathode gas before the cell reaction, and the cathode gas after the cell reaction are flowed through water permeable membrane which is a separating membrane. Since the cathode gas after the cell reaction contains water generated through the cell reaction, heat exchange and water exchange are carried out between the anode gas and the cathode gas before the cell reaction and the cathode gas after the cell reaction, thereby humidifying the anode gas and the cathode gas before the cell reaction. The water permeable membrane is required to have water permeability and heat transmissivity but not to have gas permeability. As the water permeable membrane, the fluorine based polymer membrane is suitably used.

Patent documents 4 to 8 disclose that cooling water or the like supplied to the PEFC main body are used to humidify the cathode gas and the cathode gas. To be specific, the patent document 4 discloses that the cathode gas or the cathode gas before the cell reaction and supplied water are flowed through water permeable membrane which is a separating membrane. In such a configuration, heat exchange and water exchange are carried out between the cathode gas or the cathode gas before the cell reaction and the supplied water, thereby humidifying the anode gas and the cathode gas before the cell reaction. Patent documents 5 to 8 disclose that a separator is formed by a porous member having water permeability, and an anode gas within an anode gas passage groove and a cathode gas within a cathode gas passage groove are humidified by the water entering the inside of the separator through an outer surface of the separator.

Patent document 9 discloses a fuel cell having a structure in which a humidifying chamber is provided between adjacent cells.
Patent document 1: Japanese Laid-Open Patent Application Publication No. 2002-25584
Patent document 2: Japanese Laid-Open Patent Application Publication No. 2004-288583
Patent document 3: Japanese Laid-Open Patent Application Publication No. 2005-267958
Patent document 4: Japanese Laid-Open Patent Application Publication No. Hei. 6-68896
Patent document 5: Japanese Laid-Open Patent Application Publication No. Hei. 6-68884
Patent document 6: Japanese Laid-Open Patent Application Publication No. Hei. 8-250130
Patent document 7: Japanese Laid-Open Patent Application Publication No. Hei. 6-231793
Patent document 8: Japanese Laid-Open Patent Application Publication No. Hei. 6-275284
Patent document 9: Japanese Laid-Open Patent Application Publication No. 2001-185169

### Disclosure of the Invention

### Problems to be Solved by the Invention

However, the humidifying methods disclosed in the patent documents 1 to 4 leave a room for improvement. As a result of the inventors' study, it has been found out that, since the water permeable membrane such as the polymer electrolyte membrane is required to have a large area to humidify the gases up to a humidity necessary for the cell reaction, in view of its steam permeability, the sizes of the components forming the stack is increased, and therefore the effect of configuring the fuel cell system compactly is reduced. In particular, for uses such as in-vehicle fuel cell systems, in which there is a demand for a downsize, the humidifying methods leave a room for improvement in achievement of precise and small-sized, and hence compact PEFC main body.

The humidifying methods disclosed in the patent documents 5 and 6 also leave a room for improvement. It is essential that the separator be made of porous carbon or porous metal and have unclosed fine pores on a surface thereof to enable entry of the water into the separator member and evaporation on the surface of the passage groove. However, in uses such as the in-vehicle PEFC main body in which there is a demand for vibration resistance and a reduced thickness of the separators, ordinary metal-made separators are suitably used. In some separators, the fine pores formed on the surfaces thereof are closed because of the surface treatment such as the noble metal plating. Therefore, the humidifying methods leave a room for improvement in versatility that they are applicable to separators made of any kind of material.

In the fuel cell disclosed in patent document 9, the humidifying chamber formed between the adjacent cells makes a passage structure intricate, and increases the size of the PEFC main body. That is, as in the humidifying methods disclosed in the patent documents 1 to 4, the fuel cell in the patent document 9 leaves a room for improvement in achievement of compactness of the PEFC main body.

The present invention has been developed to solve the above described problem, and an object of the present invention is to provide an MEA component which is capable of suctioning, transporting and evaporating water and of being configured compactly. Another object of the present invention is to provide a PEFC which is capable of humidifying and heating an anode gas and/or a cathode gas using a separator made of any kind of material and of configuring a PEFC main body compactly.

### Means for Solving the Problem

In view of the above described circumstances, the inventors of the present invention examined means for humidifying the anode gas and the cathode gas in the components of the PEFC other than the separator, and as a result, studied a structure of the humidifying means in a frame member for retaining the MEA.

However, the frame member of the MEA component is plate-shaped, and therefore its capacity used for forming the humidifying means is limited. In addition, the frame member of the MEA component has a structure of a gasket capability. Therefore, the humidifying means must be formed by a small capacity and have a structure which allows a humidification capability to be working or to be undamaged even though the frame member is deformed.

Accordingly, the inventors intensively studied the humidifying means which is capable of transporting water in a larger amount with a smaller capacity and of maintaining the humidification capability even in the state where a pressing force is applied to the humidifying means. As a result, the inventors found out that the problems can be avoided by utilizing a capillary structure having flexibility, and thus conceived the present invention.

An MEA component according to a first invention of the present invention, comprises an MEA; and a plate-shaped frame member which is configured to retain a portion of a polymer electrolyte membrane extending in a peripheral portion of the MEA to dispose a portion of the MEA within an inner periphery of the frame member, the frame member being provided with an anode gas supply manifold hole, a cathode gas supply manifold hole, a cooling water supply manifold hole, an anode gas discharge manifold hole, a cathode gas discharge manifold hole, and a cooling water discharge manifold hole which penetrate the frame member in a thickness direction thereof; wherein water suction portion for suctioning water is provided in at least one of a hole wall of the cooling water supply manifold hole of the frame member and a hole wall of the cooling water discharge manifold hole of the frame member, an evaporation portion for evaporating water is provided on at least one of main surfaces of the frame member, and a capillary structure is embedded in the frame member to connect the water suction portion to the evaporation portion.
In such a configuration, since the water in the cooling water supply manifold hole and/or the cooling water discharge manifold hole flows within the frame member by a capillary action of the capillary structure, and the water in the capillary structure is heated by a reaction heat generated in the MEA, the water can be evaporated on at least one main surface. Therefore, the MEA component of the present invention is capable of suctioning, transporting, and evaporating the water, and of being configured compactly. As used herein, the term "capillary structure" refers to a member which shows a hydrophilic capillary action and has flexibility.

In the MEA component according to a second invention of the present invention, the capillary structure may be exposed outside so as to form the water suction portion and the evaporation portion. Thereby, a simple structure can be formed.

In the MEA component according to a third invention of the present invention, the evaporation portion may be located closer to the MEA than the cooling water supply manifold hole and the cooling water discharge manifold hole. In such a configuration, the water can be evaporated in a larger amount.

The MEA component according to a fourth invention of the present invention, may further comprise a center member including a pair of frame-shaped films arranged in parallel, a portion of the MEA which is disposed within an inner periphery of the pair of films with a peripheral portion of the polymer electrolyte membrane sandwiched between the pair of films, the capillary structure sandwiched between the pair of films, and a seal material disposed between the pair of films so as to surround the peripheral portion of the polymer electrolyte membrane and the capillary structure, and so as to integrate the peripheral portion of the polymer electrolyte membrane, the capillary structure and the pair of films; a frame-shaped anode-side member which is stacked on a film of one of main surfaces of the center member; and a frame-shaped cathode-side member which is stacked on a film of the other main surface of the center member. In such a configuration, the mass production of the anode-side member and the cathode-side member becomes easy, and the center member can be manufactured in such a manner that a pair of films having a specified shape are prepared, the portion of the polymer electrolyte membrane corresponding to the peripheral portion of the MEA, the seal material, and the capillary structure are disposed on one of the films, the other one of the films is disposed to cover them, and these members are subjected thermal treatment. Thus, the mass production of the MEA component becomes easy.

By hardening the seal material, the seal material, the films, the portion of the polymer electrolyte membrane corresponding to the peripheral portion of the MEA, and the capillary structure can be integrated in one step. That is, the manufacturing step of the center member can be simplified.

In the MEA component according to a fifth invention of the present invention, the center member, the anode-side member, and the cathode-side member may be separate members, and may be stacked to form a polymer electrolyte fuel cell.
In such a configuration, since an step of integrating the center member, the anode-side member, and the cathode-side member is omitted, the mass productivity of the MEA component can be improved.

A polymer electrolyte fuel cell of a sixth invention of the present invention comprises an MEA component according to claim 1; and one more cells stacked, the cell including an anode separator and a cathode separator which sandwich the MEA component; wherein the anode separator has an anode gas supply manifold hole, a cathode gas supply manifold hole, a cooling water supply manifold hole, an anode gas discharge manifold hole, a cathode gas discharge manifold hole, and a cooling water discharge manifold hole in locations respectively corresponding to an anode gas supply manifold hole, a cathode gas supply manifold hole, a cooling water supply manifold hole, an anode gas discharge manifold hole, a cathode gas discharge manifold hole, and a cooling water discharge manifold hole in the MEA, the anode separator having on an inner surface thereof an anode gas passage groove connecting the anode gas supply manifold hole to the anode gas discharge manifold hole; wherein the cathode separator has an anode gas supply manifold hole, a cathode gas supply manifold hole, a cooling water supply manifold hole, an anode gas discharge manifold hole, a cathode gas discharge manifold hole, and a cooling water discharge manifold hole in locations respectively corresponding to an anode gas supply manifold hole, a cathode gas supply manifold hole, a cooling water supply manifold hole, an anode gas discharge manifold hole, a cathode gas discharge manifold hole, and a cooling water discharge manifold hole in the MEA, the cathode separator having on an inner surface thereof a cathode gas passage groove connecting the cathode gas supply manifold hole to the cathode gas discharge manifold hole; and wherein at least one of the anode gas passage groove and the cathode gas passage groove is configured to contact the evaporation portion of the MEA. In such a configuration, the polymer electrolyte fuel cell is capable of humidifying and heating the anode gas and/or the cathode gas using separators made of any kind of material, and of configuring a main body of a polymer electrolyte fuel cell compactly.

In the polymer electrolyte fuel cell according to a seventh invention of the present invention, the anode separator and the cathode separator may be made of metal. In such a configuration, the polymer electrolyte fuel cell can be configured more compactly.

### Effects of the Invention

As should be appreciated from the above, an MEA component of the present invention has an advantage that the MEA component is capable of suctioning, transporting, and evaporating the water, and of being configured compactly.

In addition, a PEFC of the present invention has an advantage that the PEFC is capable of humidifying and heating an anode gas and/or a cathode gas using separators made of any kind of material, and of configuring a main body of the polymer electrolyte fuel cell compactly.

### Brief Description of the Drawings

[Fig. 1] Fig. 1 is a partially exploded perspective view showing a stack structure of cells of a PEFC main body and a stack according to a first embodiment of the present invention;
[Fig. 2] Fig. 2 is an exploded perspective view showing the stack structure of the cells of the stack of Fig. 1;
[Fig. 3] Fig. 3 is a plan view of an MEA component of Fig. 1 as viewed from a cathode separator side;
[Fig. 4] Fig. 4 is a plan view of the MEA component of Fig. 1 as viewed from an anode separator side;
[Fig. 5] Fig. 5 is a cross-sectional view taken along line A-A of Fig. 3, showing an assembled state of the cell;
[Fig. 6] Fig. 6 is a cross-sectional view taken along line B-B of Fig. 3, showing an assembled state of the cell;
[Fig. 7] Fig. 7 is a cross-sectional view taken along line C-C of Fig. 3, showing an assembled state of the cell;
[Fig. 8] Fig. 8 is a cross-sectional view taken along line D-D of Fig. 4, showing an assembled state of the cell;
[Fig. 9] Fig. 9 is an exploded perspective view showing the stack structure of the MEA component of Fig. 1;
[Fig. 10] Fig. 10 is a plan view of an anode-side film of the MEA component of Fig. 9;
[Fig. 11] Fig. 11 is a plan view showing a state where a seal material is applied to the anode-side film of Fig. 10;
[Fig. 12] Fig. 12 is a plan view showing a state where the seal material, the MEA, and the capillary structure are provided on the anode-side film of Fig. 11;
[Fig. 13] Fig. 13 is a plan view of a center member of the MEA component of Fig. 9 as viewed from the cathode separator side;
[Fig. 14] Fig. 14 is a cross-sectional view of the MEA component of an alternative example 1, taken along line A-A of Fig. 3, showing the assembled state of the cell;
[Fig. 15] Fig. 15 is a plan view of a center member according to a fourth embodiment, as viewed from the anode separator side;
[Fig. 16] Fig. 16 is a plan view of the center member of Fig. 15 as viewed from the cathode separator side;
[Fig. 17] Fig. 17 is a plan view showing an inner surface of an anode separator according to the fourth embodiment; and
[Fig. 18] Fig. 18 is a plan view showing an inner surface of a cathode separator according to the fourth embodiment.

### Description of Reference Numerals

- 1: polymer electrolyte membrane
- 2A: anode-side catalyst layer
- 2C: cathode-side catalyst layer
- 4A: anode-side gas diffusion layer
- 4C: cathode-side gas diffusion layer
- 5: membrane-electrode assembly (MEA)
- 6: frame member
- 6A: anode-side member
- 6B: center member
- 6C: cathode-side member
- 7: MEA component
- 7A, 7C: evaporation portion
- 9A: anode separator
- 9C: cathode separator
- 10: cell
- 12I, 22I, 32I: anode gas supply manifold hole
- 12E, 22E, 32E: anode gas discharge manifold hole
- 13I, 23I, 33I: cathode gas supply manifold hole
- 13E, 23E, 33E: cathode gas discharge manifold hole
- 14I, 24I, 34I: cooling water supply manifold hole
- 14E, 24E, 34E: cooling water discharge manifold hole
- 15, 25, 35: bolt hole
- 20, 30: MEA contact region
- 21: anode gas passage groove
- 26, 36: cooling water passage groove
- 31: cathode gas passage groove
- 45A, 45C: hole
- 51: capillary structure
- 52A, 52C: film
- 53: seal material
- 61: MEA peripheral portion region
- 62: capillary structure region
- 92I: anode gas supply manifold
- 92E: anode gas discharge manifold
- 93I: cathode gas supply manifold
- 93E: cathode gas discharge manifold
- 94I: cooling water supply manifold
- 94E: cooling water discharge manifold
- 99: stack

### Best Mode for Carrying Out the Invention

Hereinafter, best mode for carrying out the invention will be described with reference to the drawings.

### (Embodiment 1)

Initially, a structure of a PEFC main body of the present embodiment will be described.

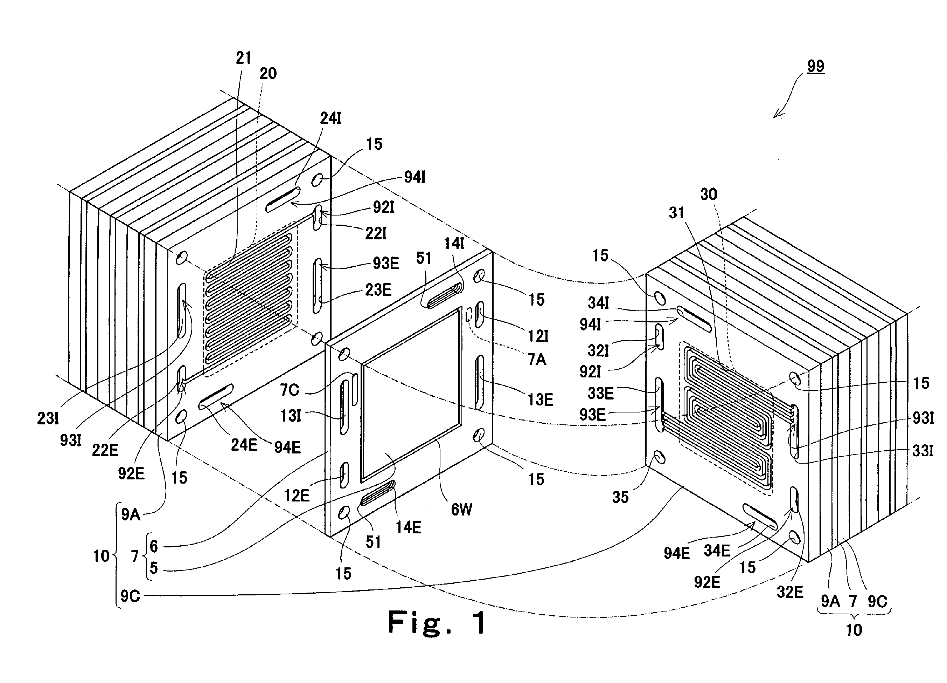

Fig. 1 is a partially exploded perspective view showing a stack structure of cells of a PEFC main body and a stack according to a first embodiment of the present invention.

As shown in Fig. 1, a plurality of cells (unit cells) 10 of a rectangular flat-plate-shape are stacked to form a stack 99 in a rectangular parallelepiped shape in the PEFC main body. The stack 99 is used in fuel cell systems in household cogeneration systems, motorcycles, electric cars, hybrid electric cars, household appliances, and portable electric devices such as portable computer devices, cellular phones, portable acoustic devices, or portable information terminals.

Although not shown, current collecting plates, insulating plates, and end plates are attached to outermost layers of both ends of the stack 99, and are fastened from the direction of the both ends by fastener bolts (not shown) inserted into bolt holes 15, 25, and 35 and nuts.

Each cell 10 has a structure in which an MEA component 7 is sandwiched between a pair of anode separator 9A of a flat-plate shape and cathode separator 9C of a flat-plate shape (these are collectively referred to as separators).

The bolt holes 15, 25, and 35, anode gas supply manifold holes 12I, 22I and 32I, anode gas discharge manifold holes 12E, 22E, and 32E, cathode gas supply manifold holes 13I, 23I and 33I, cathode gas discharge manifold holes 13E, 23E, and 33E, cooling water supply manifold holes 14I, 24I, and 34I, and cooling water discharge manifold holes 14E, 24E and 34E are formed in the peripheral portions of the separators 9A and 9C and the peripheral portion of the MEA component 7 so as to penetrate main surfaces thereof. The anode gas supply manifold holes 12I, 22I, and 32I are connected to each other in the stack 99 to form an anode gas supply manifold 92I, and the anode gas discharge manifold holes 12E, 22E, and 32E are connected to each other in the stack 99 to form an anode gas discharge manifold 92E. In the same manner, the cathode gas supply manifold holes 13I, 23I, and 33I are connected to each other in the stack 99 to form a cathode gas supply manifold 93I, and the cathode gas discharge manifold holes 13E, 23E, and 33E are connected to each other in the stack 99 to form a cathode gas discharge manifold 93E. Furthermore, in the same manner, the cooling water supply manifold holes 14I, 24I, and 34I are connected to each other in the stack 99 to form a cooling water supply manifold 94I and the cooling water discharge manifold holes 14E, 24E and 34E are connected to each other in the stack 99 to form a cooling water discharge manifold 94E.

The separators 9A and 9C are made of an electrically-conductive material. In an assembled state of the cell 10, an MEA contact region 20 formed on an inner surface of the anode separator 9A is in contact with an anode-side gas diffusion layer 4A of the MEA 5, while an MEA contact region 30 formed on an inner surface of the cathode separator 9C is in contact with a cathode-side gas diffusion layer 4C of the MEA 5. Since the separators 9A and 9C are made of the electrically-conductive material, an electrode energy generated in the MEA 5 is taken out via the separators 9A and 9C.

On the inner surface of the anode separator 9A, an anode gas passage groove 21 is formed to connect the anode gas supply manifold hole 22I to the anode gas discharge manifold hole 22E. The anode gas passage groove 21 is formed in a serpentine shape over a substantially entire surface of the MEA contact region 20. In the same manner, on the inner surface of the cathode separator 9C, a cathode gas passage groove 31 is formed to connect the cathode gas supply manifold hole 33I to the cathode gas discharge manifold hole 33E. The cathode gas passage groove 31 is formed in a serpentine shape over a substantially entire surface of the MEA contact region 30. Thus, in the assembled state of the cell 10, an anode gas passage extending to connect the anode gas supply manifold hole 22I to the anode gas discharge manifold hole 22E is formed between the MEA component 7 and the anode separator 9A. In addition, a cathode gas passage extending to connect the cathode gas supply manifold hole 33I to the cathode gas discharge manifold hole 33E is formed between the MEA component 7 and the cathode separator 9C. The anode gas flowing in the anode gas passage groove 21 diffuses into the anode-side gas diffusion layer 4A in a wide area, while the cathode gas flowing in the cathode gas passage groove 31 diffuses into the cathode-side gas diffusion layer 4C in a wide area.

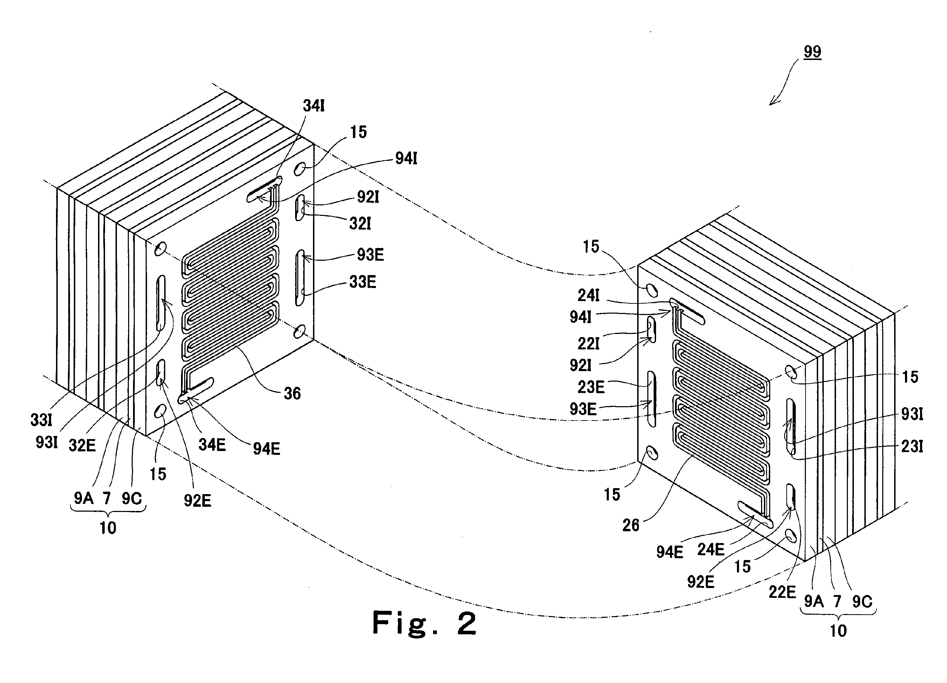

Fig. 2 is an exploded perspective view showing the stack structure of the cells of the stack of Fig. 1. As shown in Fig. 2, on an outer surface of the anode separator 9A, a cooling water passage groove 26 is formed to connect the cooling water supply manifold hole 24I to the cooling water discharge manifold hole 24E. The cooling water passage groove 26 is formed in a serpentine shape over an entire surface of a back portion of the MEA contact region 20. In the same manner, on an outer surface of the cathode separator 9C, a cooling water passage groove 36 is formed to connect the cooling water supply manifold hole 34I to the cooling water discharge manifold hole 34E. The cooling water passage groove 36 is formed in a serpentine shape over an entire surface of a back portion of the MEA contact region 30. The stack 99 is formed such that the cooling water passage groove 26 and the cooling water passage groove 36 are joined to each other. That is, in the stack state of the cells 10, the cooling water passage grooves 26 and 36 are integral with each other, and the cooling water passage extending to connect the cooling water supply manifold hole 24I to the cooling water discharge manifold hole 24E and the cooling water passage extending to connect the cooling water supply manifold hole 34I to the cooking water discharge manifold hole 34E are formed between the surfaces of the stacked cells 10.

Subsequently, the MEA component 7 will be described.

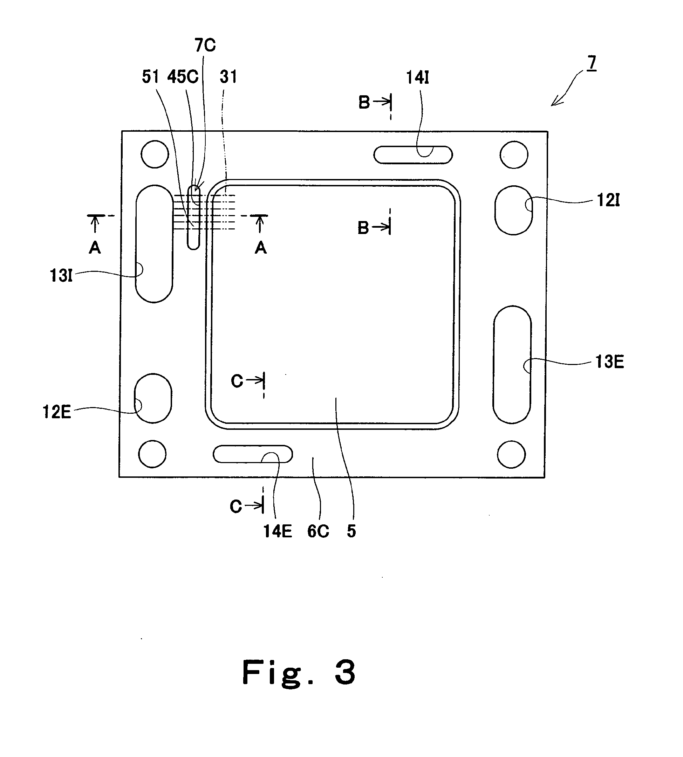

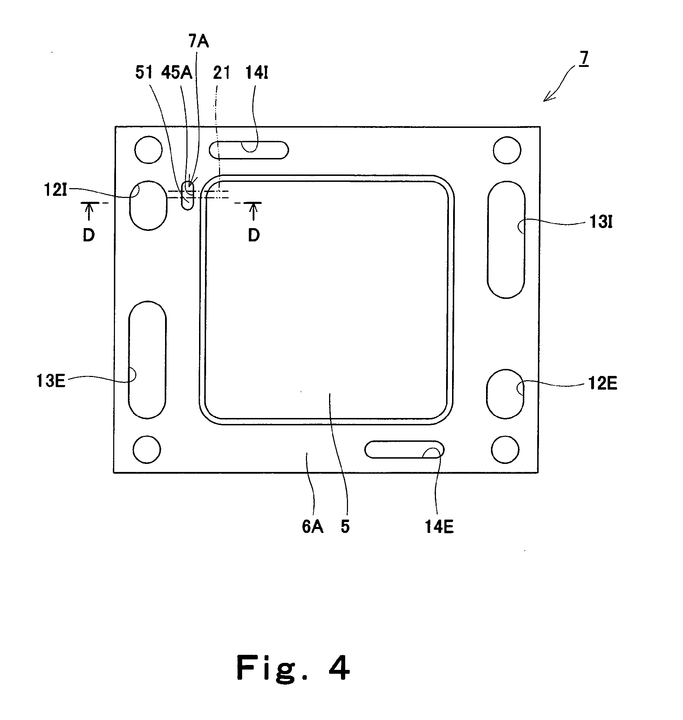

Fig. 3 is a plan view of an MEA component of Fig. 1 as viewed from the cathode separator side. Fig. 4 is a plan view of the MEA component of Fig. 1 as viewed from the anode separator side.

As shown in Figs. 3 and 4, the MEA component 7 includes the MEA 5 in a center region and the fame member 6 in a peripheral portion thereof in a plan view, and the bolt holes and the manifold holes are formed to penetrate the frame member 6.

The frame member 6 has an elastic body at least on a surface thereof. The frame member 6 serves as a gasket in the MEA component 7 disposed between the anode separator 9A and the cathode separator 9C.

An evaporation portion 7C is formed, and a capillary structure 51 is exposed to outside in a region between the cathode gas supply manifold hole 13I and the MEA 5 on the surface of the MEA component 7 on the cathode separator side. Since the cathode gas passage groove 31 of the cathode separator 9c extends from the cathode gas supply manifold hole 33I to the MEA contact region 30, the cathode gas passage groove 31 in this range is configured to contact the cathode-side evaporation portion 7C in the assembled state of the cells 10.

Likewise, as shown in Fig. 4, an evaporation portion 7A is formed and the capillary structure 51 is exposed to outside in a region between the anode gas supply manifold hole 12I and the MEA 5 on the surface of the MEA component 7 on the anode separator side. Since the anode gas passage groove 21 of the anode separator 9A extends from the anode gas supply manifold hole 22I to the MEA contact region 20, the anode gas passage groove 21 in this range is in contact with the anode-side evaporation portion 7A in the assembled state of the cells 10.

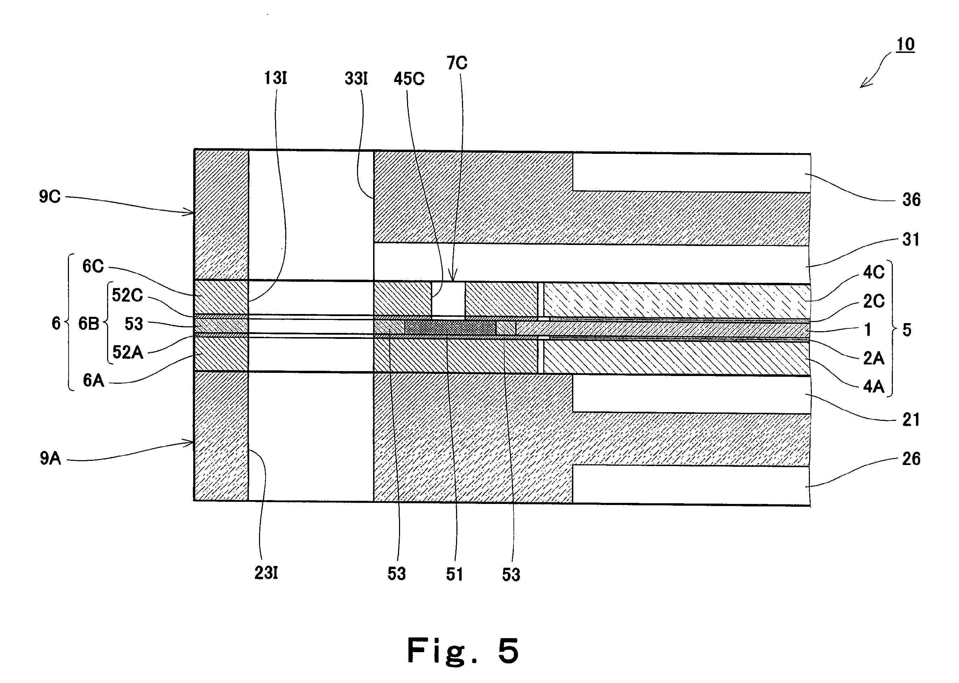

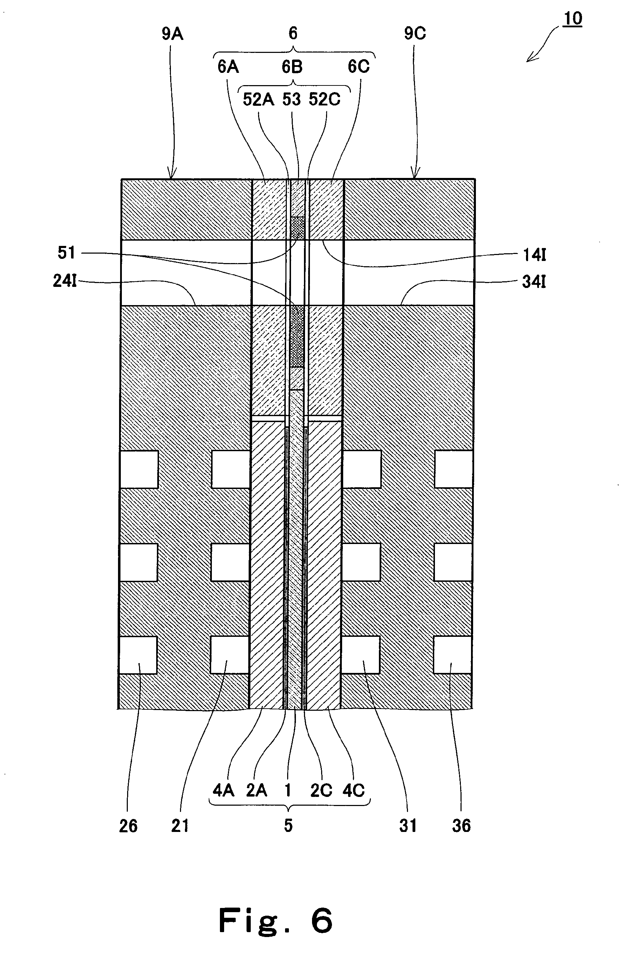

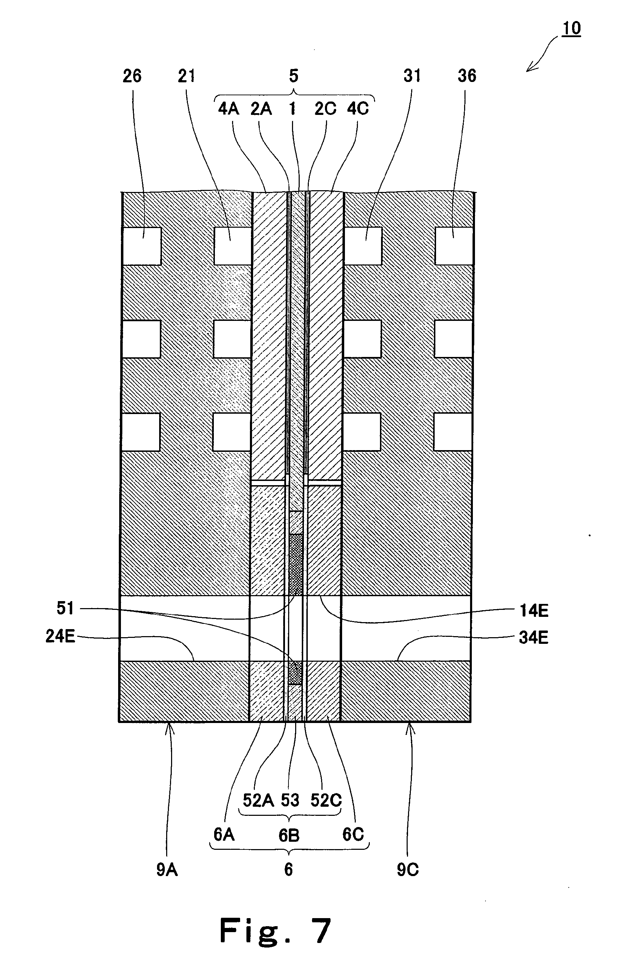

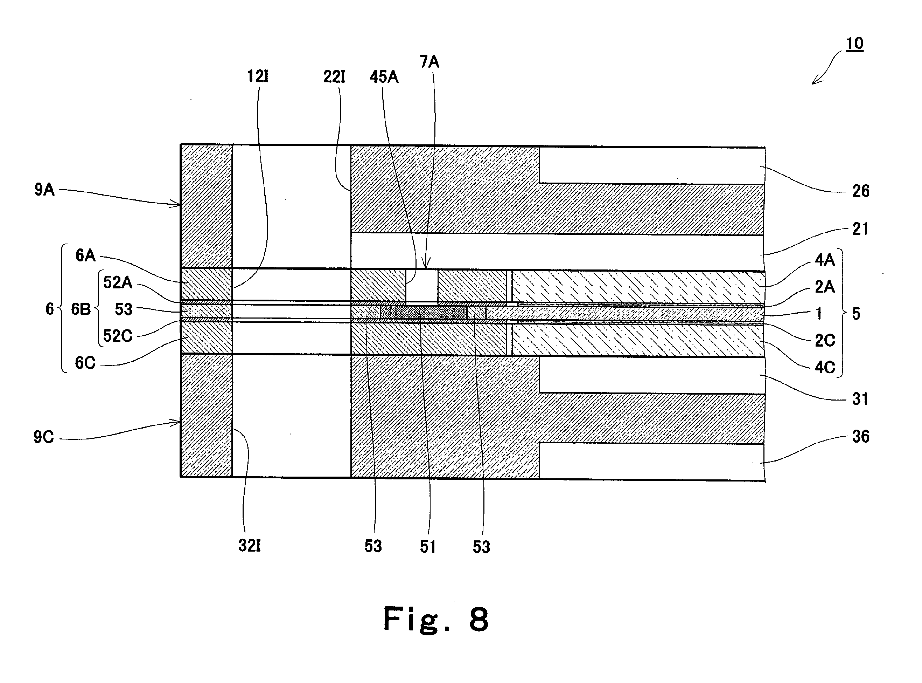

Fig. 5 is a cross-sectional view taken along line A-A of Fig. 3, showing an assembled state of the cell. Fig. 6 is a cross-sectional view taken along line B-B of Fig. 3, showing the assembled state of the cell. Fig. 7 is a cross-sectional view taken along line C-C of Fig. 3, showing the assembled state of the cell. Fig. 8 is a cross-sectional view taken along line D-D of Fig. 4, showing the assembled state of the cell.

As shown in Figs. 5 to 8, the MEA 5 includes a polymer electrolyte membrane 1 and a pair of electrodes stacked on both surfaces thereof. To be specific, the MEA 5 includes the polymer electrolyte membrane 1 formed of an ion exchange membrane which allows hydrogen ions to selectively permeate, and the pair of electrode layers formed on both surfaces of a region inward of the peripheral portion of the polymer electrolyte membrane 1. The electrode layers include a pair of anode-side catalyst layer 2A and cathode-side catalyst layer 2C which are mainly made of carbon powder carrying platinum based metal catalyst, and the pair of anode-side gas diffusion layer 4A and cathode-side gas diffusion layer 4C which are provided on the outer surfaces of the pair of catalyst layers 2A and 2C, respectively. Note that the gas diffusion layers 4A and 4C have a porous structure to have both gas permeability and electron conductivity. That is, the cathode-side catalyst layer 2C and the cathode-side gas diffusion layer 4C form a cathode electrode, while the anode-side catalyst layer 2A and the anode-side gas diffusion layer 4A form an anode electrode.

As the polymer electrolyte membrane 1, a membrane made of perfluorosulfonic acid is suitably used. For example, Nation (registered mark) membrane produced by DuPont Co., Ltd. is used. The MEA 5 is generally manufactured by, for example, a method of applying the catalyst layers 2A and 2C and the gas diffusion layers 4a and 4C sequentially on the polymer electrolyte membrane and by sequentially transfer printing them. Alternatively, a commercially available product of the MEA 5 which is manufactured in this way may be used.

Subsequently, a structure of the frame member 6 of the MEA component 7 which is a major feature of the present invention will be described.

As shown in Figs. 5 to 8, the capillary structure 51 is embedded in the frame member 6. To be specific, the capillary structure 51 is surrounded by a seal material (seal element) 53 in a plane direction (direction parallel to a main surface) of the MEA component 7. The capillary structure 51 is covered with a plate-shaped cathode-side member 6C and a cathode-side film 52C, and an anode-side member 6A and an anode-side film 52A in a thickness direction of the MEA component 7.

The term "capillary structure 51" refers to a member which shows hydrophilic capillary action and has flexibility. In general, the capillary structure 51 is a member formed of plant fibers, metal fibers, carbon fibers or synthetic fibers, and is in the form of a string or a non-woven fabric. The capillary structure 51 has a thickness substantially equal to that of the polymer electrolyte membrane 1. The capillary structure 51 is formed of very thin fibers of approximately several µm. Thus, the capillary structure 51 is processed to have a small thickness substantially equal to that of the polymer electrolyte membrane 1, i.e., approximately several tens µ m.

As shown in Fig. 5, the capillary structure 51 is exposed so as to form the evaporation portion 7C on the bottom of the hole 45C formed in the cathode-side member 6C and the cathode-side film 52C. The cathode gas passage groove 31 of the cathode separator 9C is in contact with the evaporation portion 7C of the MEA component 7.

As shown in Figs. 6 and 7, the capillary structures 51 are exposed to outside in a hole wall (water suction portion) of the cooling water supply manifold hole 14I and in a hole wall (water suction portion) of the cooling water discharge manifold hole 14E. That is, the water suction portions are formed in the cooling water supply manifold hole 14I and in the cooling water discharge manifold hole 14E.

As shown in Fig. 8, the capillary structure 51 is exposed so as to form an evaporation portion 7A on a bottom of the hole 45A formed in the anode-side member 6A and the anode-side film 52A. The anode gas passage groove 21 of the anode separator 9A is in contact with the evaporation portion 7A.

The capillary structures 51 embedded in the gasket 6 serve to transport the water suctioned from the water suction portions (cooling water supply manifold hole 14I and the cooling water discharge manifold hole 14E) to the evaporation portions 7A and 7C by their capillary action. The evaporation portions 7A and 7C serve to evaporate the water into the anode gas passage groove 21 and the cathode gas passage groove 31, respectively due to reaction heat of the MEA 5.

Hereinafter, a structure of the frame member 6 of the MEA component 7 of the present embodiment will be described.

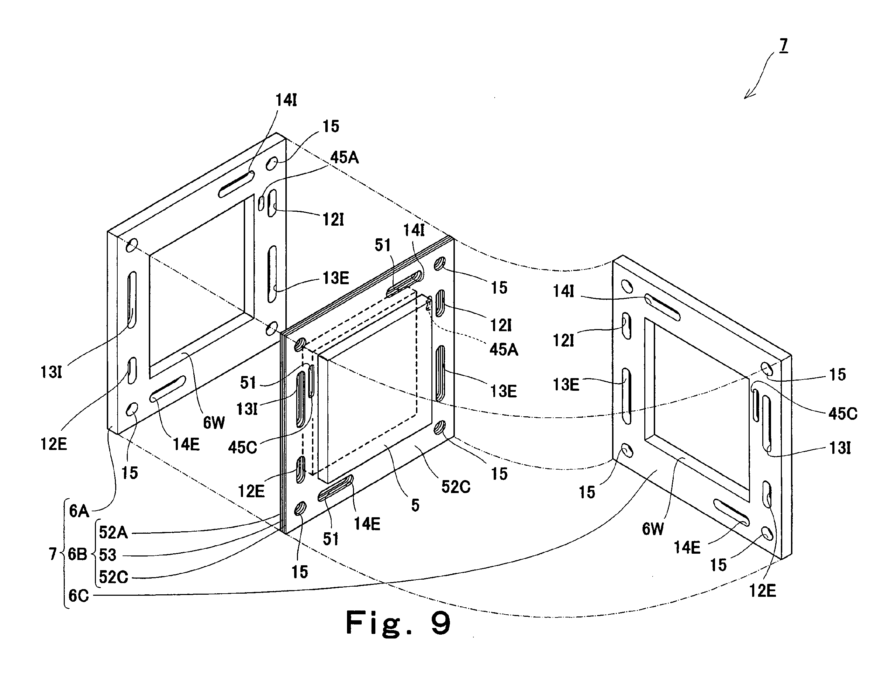

Fig. 9 is an exploded perspective view showing the stack structure of the MEA component of Fig. 1.

As shown in Fig. 9, the frame member 6 is configured to include the seal material 53, the capillary structures 51, the films 52A and 52C, the anode-side member 6A, and the cathode-side member 6C.

Hereinafter, the structure of the frame member 6 of the MEA component 7, i.e., three members which are the anode-side member 6A, the center member 6B, and the cathode-side member 6C will be individually described.

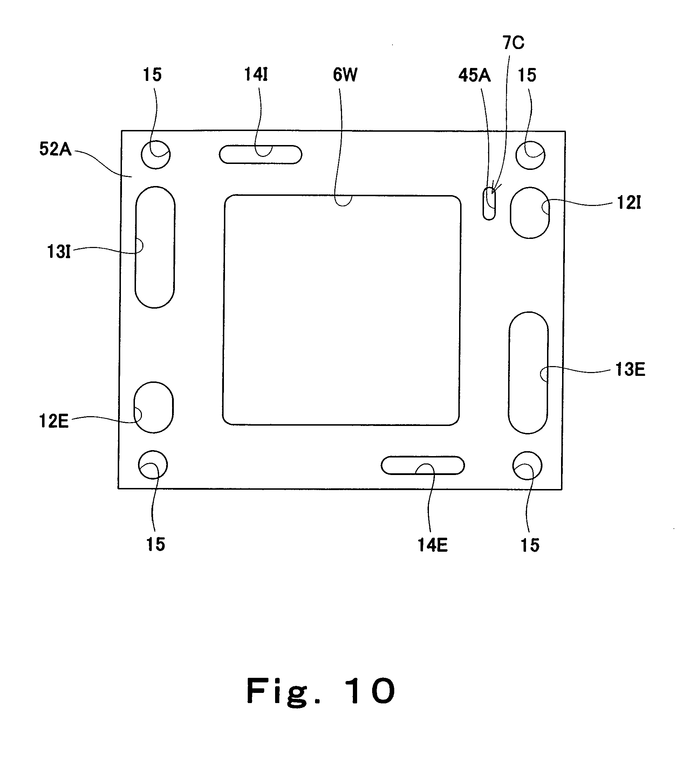

First, the structure of the center member 6B will be described. For the convenience of description, this will be described with reference to four exploded views, i.e., Figs. 10 to 13.

Fig. 10 is a plan view of the anode-side film of the MEA component of Fig. 9.

As shown in Fig. 10, the anode-side film 52A is frame-shaped, and has a rectangular outer shape. The anode-side film 52A is provided with an opening 6W in a center region thereof.

The opening 6W defines a frame shape so that the MEA 5 is exposed and a portion of the polymer electrolyte membrane 1 extending in a peripheral portion of the MEA 5 overlaps with the film 52A over the entire periphery of the opening 6W with the MEA 5 disposed therein. As described later, the cathode-side film 52C, the anode-side member 6A and the cathode-side member 6C are formed in a frame shape to have the opening 6W.

The bolt holes 15, 25, and 35, and the manifold holes 12I, 12E, 13I, 13E, 14I, and 14E are formed around the opening 6W to penetrate the film 52A in a thickness direction thereof. In addition, the anode-side hole 45A is formed in a region between the anode-gas supply manifold 12I and the opening 6W.

The film 52A is suitably made of a material which is water-proof, has a heat resistance with respect to a heat generation temperature of the cell 10 or higher, and is stable in property with respect to the anode gas and the cathode gas. For example, as the film 52A, an engineering plastic film made of a material such as polyethylene terephthalate (PET), polyethylene naphthalate (PEN), or polyetherimide (PEI) is suitably used. The film 52A has a thickness substantially equal to that of the catalyst layer 2A (see Figs. 5 through 8).

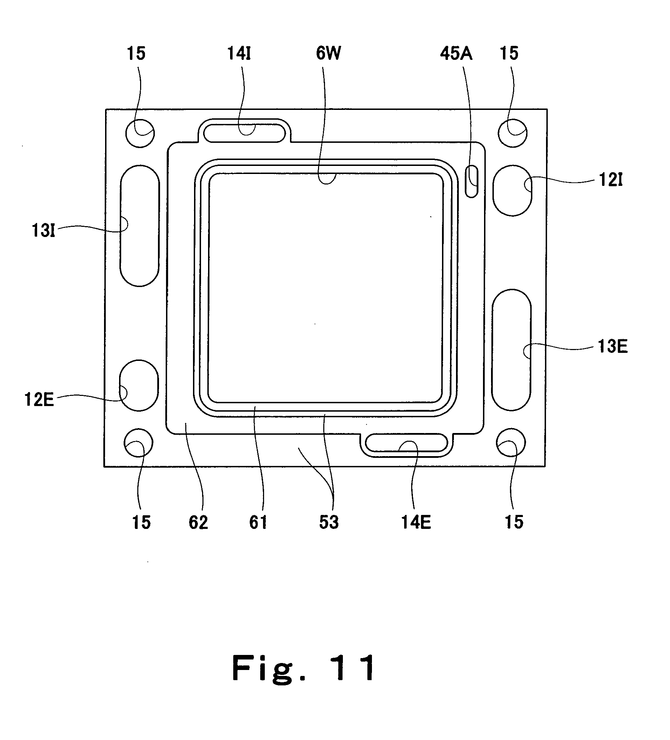

Fig. 11 is a plan view showing a state where the seal material is applied to the anode-side film of Fig. 10.

As shown in Fig. 11, the seal material 53 is applied onto the film 52A by screen printing to have a thickness substantially equal to that of the polymer electrolyte membrane 1 (see Figs. 5 to 8).

The seal material 53 is disposed over the entire surface of the film 52A except for the MEA peripheral portion region 61 and the capillary structure region 62. To be specific, the seal material 53 is disposed between the pair of films 52A and 52C so as to surround the peripheral portion of the polymer electrolyte membrane 1 and the capillary structure 51, and so as to integrate the peripheral portion of the polymer electrolyte membrane 1, the capillary structure 51 and the pair of films 52A and 52C. Furthermore, the seal material 53 is disposed to fill a space between the pair of films 52A and 52C. That is, the seal material 53 is disposed to surround the bolt holes 15, the anode gas supply manifold hole 12I, the anode gas discharge manifold hole 12E, the cathode gas supply manifold hole 13I and the cathode gas discharge manifold hole. The MEA peripheral portion region 61 and the capillary structure region 62 are formed in a recessed portion where the seal material 53 is not disposed.

The seal material 53 is provided by being applied onto the film 52A.

The MEA peripheral portion region 61 is formed around the opening 6W in a plan view so as to be able to accommodate the portion of the polymer electrolyte membrane 1 extending in the peripheral portion of the MEA 5. Since the polymer electrolyte membrane 1 is disposed between the both surfaces of the center member 6B, the MEA peripheral portion region 61 is formed to extend around the outer periphery of the opening 6W in an annular shape. Therefore, the MEA peripheral portion region 61 is determined according to the shape of the portion of the polymer electrolyte membrane 1 extending in the peripheral portions of the MEA 5 and the shape of the opening 6W.

The capillary structure region 62 is provided such that the seal material 53 is disposed between the capillary structure region 62 and the MEA peripheral portion region 61. Herein, the seal material 53 is applied in the annular shape along the outer periphery of the MEA peripheral portion region 61. The capillary structure region 62 is formed to extend along the outer periphery of the annular seal material. This makes it possible to prevent leakage of the water in the capillary structure 51 into the interior of the MEA 5.

The capillary structure region 62 is formed to surround both of the cooling water supply manifold hole 14I and the cooling water discharge manifold hole 14E. Thereby, the water suction portions are formed in the hole wall of the cooling water supply manifold hole 14I and in the hole wall of the cooling water discharge manifold hole 14E.

The water suction portion may be formed in at least one of the cooling water supply manifold hole 14I and the cooling water discharge manifold hole 14E. Therefore, the capillary structure region 62 may be formed to face at least one of the cooling water supply manifold hole 14I and the cooling water discharge manifold hole 14E.

Furthermore, the capillary structure region 62 is formed to include the hole 45A of the film 52A. Thereby, the capillary structure 51 is exposed at a location of the hole 45A so as to form the evaporation portion 7A.

The seal material 53 is suitably made of a material which is water-proof, has a heat resistance with respect to a heat generation temperature of the cell 10 or higher, and is stable in property with respect to the anode gas and the cathode gas. For example, elastomer such as ethylene-propylene-diene rubber (EPDM) is suitable.

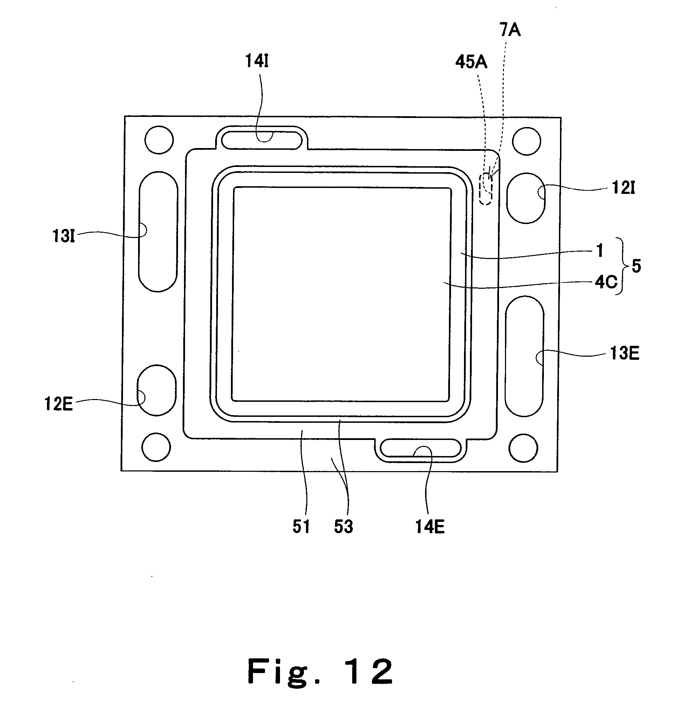

Fig. 12 is a plan view showing a state where the seal material, the MEA, and the capillary structure are provided on the anode-side film of Fig. 11.

As shown in Fig. 12, the MEA 5 and the capillary structure 51 are disposed on the MEA peripheral portion region 61 and the capillary structure region 62 on the film 52A, respectively.

The MEA 5 is disposed in such a manner that the electrode layers 4A and 4C are located in the opening 6W and the peripheral portion of the polymer electrolyte membrane 1 is accommodated in the MEA peripheral portion region 61.

The capillary structure 51 is accommodated in the capillary structure region 62. The capillary structure 51 is exposed in the anode-side hole 45A of the film 52A.

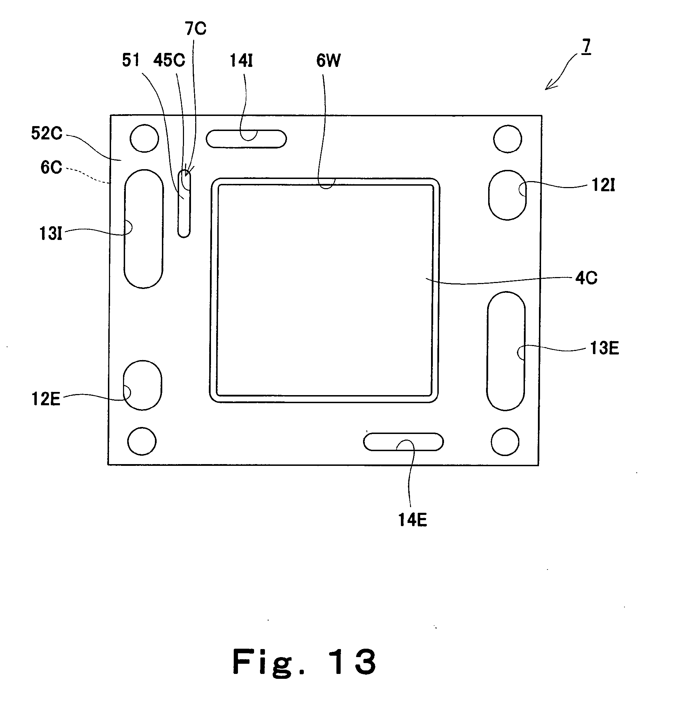

Fig. 13 is a plan view of a center member of the MEA component of Fig. 9 as viewed from the cathode separator side.

As shown in Fig. 13, the cathode-side film 52C is disposed in the center member 6B so as to cover the seal material 53, the peripheral portion of the MEA 5 and the capillary structure 51. The center member 6B including the cathode-side film 52C has been subjected to thermal treatment to harden the seal material 53 inside thereof. The thermal treatment enables the seal material 53 to be joined to the films 52A and 52C, the portion of the polymer electrolyte membrane 1 corresponding to the peripheral portion of the MEA 5, and the capillary structure 51 and hardened so that the center member 6B is integrated.

The cathode-side film 52C is frame-shaped, and has a rectangular outer shape. The cathode-side film 52C is provided with the opening 6W at a center region thereof. The bolt holes 15, 25, and 25 and the manifold holes 12I, 12E, 13I, 13E, 14I, and 14E are formed around the opening 6W to penetrate the peripheral portion of the film 52C in a thickness direction thereof.

The cathode-side hole 45C is formed in a location of the film 52C to be in contact with the capillary structure 51. Thereby, the capillary structure 51 is exposed in the location of the hole 45C, so as to form the evaporation portion 7C. To be specific, the cathode-side hole 45C is formed in a region between the cathode gas supply manifold hole 13I and the opening 6W.

The films which are suitable for use as the cathode-side film 52C are similar to those of the anode-side film 52. The film 52C has a thickness substantially equal to that of the catalyst layer 2C. As described above, the center member 6B includes the pair of frame-shaped films 52A and 52C arranged in parallel. The peripheral portion of the polymer electrolyte membrane 1 is sandwiched between the pair of films 52A and 52C, and the portion of the MEA 5 is exposed within the inner periphery of the films 52A and 52C. The capillary structure 51 is sandwiched between the pair of films 52A and 52C. Furthermore, the seal material 53 is disposed between the pair of films 52A and 52C so as to surround the peripheral portion of the polymer electrolyte membrane 1 and the capillary structure 51, and so as to integrate the peripheral portion of the polymer electrolyte membrane 1, the capillary structure 51 and the pair of films 52A and 52C.

The anode-side member 6A and the cathode-side member 6C are each suitably formed of a flat-plate-shaped elastic body and is made of a material having a heat resistance with respect to a heat generation temperature of the cell 10 or higher. This enables good sealing function against a fastening load of the PEFC main body.

The anode-side member 6A and the cathode-side member 6C are suitably made of a material which is chemically stable with respect to the water and the anode gas. To be specific, as the material for the anode-side member 6A and the cathode-side member 6C, fluorocarbon rubber or thermoplastic elastic material is suitably used. An example of the thermoplastic elastic material may be Santoprene 8101-55 (produced by Advanced Elastomer System Co., Ltd) which is a polyolefin based thermoplastic elastic material.

The anode-side member 6A has the same planar shape as the anode-side film 52A. To be specific, as shown in Fig. 10, the anode-side member 6A is provided with the opening 6W in a center region thereof. The bolt holes 15, 25, and 35 and the manifold holes 12I, 12E, 13I, 13E, 14I, and 14E are formed around the opening 6W to penetrate the member 6A in a thickness direction thereof. The hole 45A is formed in a location of the anode-side member 6A so as to be connected to the hole 45A of the film 52A.

In the same manner, the cathode-side member 6C has the same planar shape as the cathode-side film 52C. To be specific, as shown in Fig. 13, the cathode-side member 6C is provided with the opening 6W in a center region thereof. The bolt holes 15, 25, and 35 and the manifold holes 12I, 12E, 13I, 14I, and 14E are formed around the opening 6W to penetrate the member 6C in a thickness direction thereof. The hole 45C is formed in a location of the cathode-side member 6C so as to be connected to the hole 45C of the film 52C.

In such a structure, the evaporation portion 7A is configured such that the capillary structure 51 is exposed outside at a bottom portion of the anode-side hole 45A formed to extend through the anode-side member 6A and the anode-side film 52A. In the same manner, the evaporation portion 7C is configured such that the capillary structure 51 is exposed outside at a bottom portion of the cathode-side hole 45C formed to extend through the cathode-side member 6C and the cathode-side film 52C.

The evaporation portions 7A and 7C are located closer to the MEA peripheral portion region 61 than the cooling water supply manifold hole 14I and the cooling water discharge manifold hole 14E. In such a structure, the water in the evaporation portions 7A and 7C is heated by the reaction heat generated by the MEA 5. As a result, the water can be evaporated in a larger amount. The evaporation portion 7A is formed in a region between the anode-gas supply manifold hole 12I and the opening 6W, and the evaporation portion 7C is formed in a region between the cathode gas supply manifold hole 13I and the opening 6W.

The outer surface of the anode-side member 6A and the outer surface of the cathode-side member 6C are configured to be in close contact with the inner surface of the anode-side separator 9A and the inner surface of the cathode-side separator 9C, respectively. Since the inner surface of the anode separator 9A and the inner surface of the cathode separator 9C are flat, the outer surface of the anode-side member 6A and the outer surface of the cathode-side member 6C are located to be coplanar with the gas diffusion layers 4A and 4C of the MEA 5, respectively. To be specific, the anode-side member 6A is configured to have a thickness substantially equal to that of the anode-side gas diffusion layer 4A, and the cathode-side member 6C is configured to have a thickness substantially equal to that of the cathode-gas diffusion layer 4C. Alternatively, if the MEA contact regions 20 and 30 of the separators 9A and 9C are formed to be one-step higher than the inner surfaces of the separators 9A and 9C, the anode-side member 6A may be configured to be thicker than the anode-side gas diffusion layer 4A by a dimension equal to the one step of the MEA contact region 20, and the cathode-side member 6C may be configured to be thicker than the cathode-side gas diffusion layer 4C by a dimension equal to the one step of the MEA contact region 30. Thereby, in the assembled state of the cell 10, the gas diffusion layer 4A and the anode-side member 6A are in contact with and pressed evenly against the separator 9A, and the gas diffusion layer 4C and the cathode-side member 6C are in contact with and pressed evenly against the separator 9C. As a result, leakage of the anode gas, the cathode gas or the cooling water to outside or outside the passage can be suppressed.

Since the MEA component 7 is structured as described above, the mass production of the anode-side member 6A and the cathode-side member 6C can be achieved, and the center member 6B can be manufactured in such a manner that a pair of films 52A and 52C having a specified shape are prepared, the portion of the polymer electrolyte membrane 1 corresponding to the peripheral portion of the MEA 5, the seal material 53, and the capillary structure 51 are disposed on one of the films 52A and 52C, the other one of the films 52A and 52C is disposed to cover them, and these members are subjected thermal treatment. That is, the mass production of the MEA component 7 becomes easy.

The center member 6B is manufactured based on the steps of Figs. 10 to 13. Therefore, by hardening the seal material, the components of the center member 6B can be integrated in one step. Therefore, the manufacturing step of the center member 6B can be simplified.

Furthermore, the MEA component 7 has a structure in which three members, i.e., the anode-side member 6A, the center member 6B, and the cathode-side member 6C are separate members. In the assembled state of the cell 10, these members are stacked and caused to closely contact each other, forming the MEA component 7 having an integral structure. To be specific, in the assembled state of the cell 10, the anode-side member 6A and the cathode-side member 6C are stacked on the films 52A and 52C of the center member 6B, respectively. Therefore, by forming the members 6B, 6A, and 6C as separate members, a step of integrating the center member 6B, the anode-side member 6A, and the cathode-side member 6C may be omitted. As a result, the mass productivity of the MEA component can be improved.

Subsequently, the operation of the stack 99 configured as described above will be described with reference to Fig. 1.

Initially, the anode gas is supplied to the anode gas supply manifold 92I and the cathode gas is supplied to the cathode gas supply manifold 93I.

The anode gas flows to branch from the respective anode gas supply manifold holes 22I to the anode gas passage grooves 21. In the same manner, the cathode gas flows to branch from the respective cathode gas supply manifold holes 33I to the cathode passage grooves 31. The gases are pre-heated in the supply manifold holes 92I and 93I, respectively by the heat generated through the cell reaction in the PEFC.

The cooling water flows to branch from the respective cooling water supply manifold holes 24I and 34I to the cooling water passage grooves 26.

A part of the cooling water enters the capillary structure 51 in the hole wall of the cooling water supply manifold 14I or in the hole wall of the cooling water discharge manifold hole 14E. Then, the cooling water reaches the evaporation portion 7A or 7C through the capillary structure 51.

During the power generation operation of the cells 10, the reaction heat generated through the cell reaction in the MEA 5 is transferred to the capillary structures 51 through at least one of the polymer electrolyte membrane 1, the seal material 53, the films 52A and 52C, and the anode-side member 6A and the cathode-side member 6C, the water entering the capillary structures 51 is heated. In addition, since the evaporation portions 7A and 7C are located closer to the MEA 5 than the cooling water supply manifold hole 14I and the cooling water discharge manifold hole 14E, the water can be evaporated in a larger amount in the evaporation portions 7A and 7C.

The anode gas in a portion of the anode-gas passage groove 21 extending from the anode gas supply manifold hole 22I to the MEA contact region 20 is humidified and heated by the water evaporated from the evaporation portion 7A. In the same manner, the anode gas in a portion of the cathode-gas passage groove 31 extending from the cathode gas supply manifold hole 33I to the MEA contact region 30 is humidified and heated by the water evaporated from the evaporation portion 7C.

When the anode gas reaches the anode passage groove 21 in the MEA contact region 20, the anode-side gas diffusion layer 4A is exposed to the anode gas. The anode gas diffuses into and permeates the anode-side gas diffusion layer 4A and reaches the anode-side catalyst layer 2A (see Fig. 8). Likewise, when the cathode gas reaches the cathode passage groove 31 in the MEA contact region 30, the cathode-side gas diffusion layer 4C is exposed to the cathode gas. The cathode gas diffuses into and permeates the cathode-side gas diffusion layer 4C, and reaches the cathode-side catalyst layer 2C (see Fig. 5).

When an electric connection circuit is established between the anode-side catalyst layer 2A and the cathode-side catalyst layer 2C via the anode separator 9A, the cathode separator 9C, the current collecting plate (not shown), and an external electric circuit (not shown), an electrochemical reaction between the anode gas and the cathode gas progresses, so that the water, the heat, and the electricity are generated in the cathode-side electrode and the cathode gas passage groove 31.

The excess anode gas is discharged to the anode gas discharge manifold holes 22E connected to the anode passage grooves 21 and is discharged from the anode gas discharge manifold 92E to outside. In the same manner, the excess cathode gas is discharged to the cathode gas discharge manifold holes 33E connected to the cathode passage grooves 31 and is discharged from the cathode gas discharge manifold 93E to outside. Furthermore, the cooling water is discharged to the cooling water discharge manifold holes 24E and 34E connected to the cooling water passage grooves 26 and 36, respectively, and is discharged from the cooling water discharge manifold hole 94E to outside.

### (Embodiment 2)

An MEA component of a second embodiment has the same structure as the MEA component 7 of the first embodiment except that the hole 45C of the cathode-side film 52C and the cathode-side member 6C is omitted from the MEA component 7 of the first embodiment (see Fig. 9).

To be specific, the evaporation portion 7C on the cathode separator 9C side is not provided in the MEA component of the second embodiment, but the evaporation portion 7A on the anode separator 9A side is provided therein. Therefore, in the cell 10, the cooling water is not used to humidify and heat the cathode gas, but the evaporation portion 7A on the anode separator 9A side uses the cooling water to humidify and heat the anode gas in the anode-gas passage groove 21.

### (Embodiment 3)

An MEA component of a third embodiment has the same structure as the MEA component 7 of the first embodiment except that the hole 45A of the anode-side film 52A and the anode-side member 6A is omitted from the MEA component 7 of the first embodiment (see Fig. 9).

To be specific, the evaporation portion 7A on the anode separator 9A side is not provided in the MEA component of the third embodiment, but the evaporation portion 7C on the cathode separator 9C side is provided therein. Therefore, in the cell 10, the cooling water is not used to humidify and heat the anode gas, but the evaporation portion 7C on the cathode separator 9C side uses the cooling water to humidify and heat the cathode gas in the cathode gas passage groove 31.

In the MEA component of the present invention, the water suction portion may be provided in at least one of the hole wall of the cooling water supply manifold hole 14I and the hole wall of the cooling water discharge manifold hole 14E, the evaporation portion may be provided on at least one of main surfaces of the MEA component, and the capillary structure 51 may be embedded to connect the water suction portion to the evaporation portion. For example, the MEA component 7 of the present embodiment may have a structure according to an alternative example 1 described below.

### [Alternative Example 1]

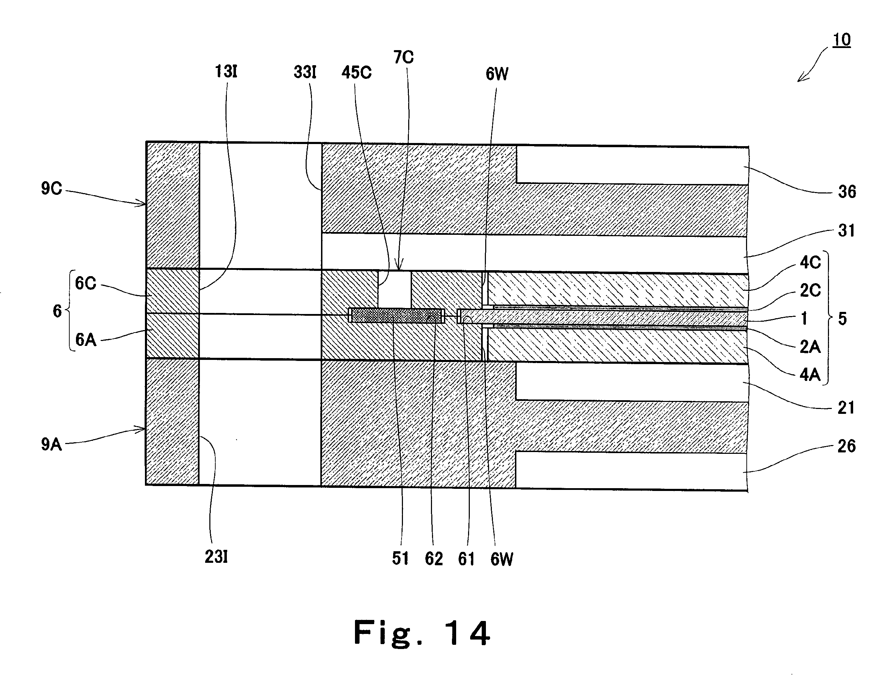

Fig. 14 is a cross-sectional view taken along line A-A of Fig. 3, showing the assembled state of the cell, in the MEA component of the alternative example 1.

In the alternative example 1, the structure of the frame member 6 of the MEA component 7 is altered. To be specific, the seal material 53 and the films 52A and 52C of the center member 6B are omitted, and the capillary structure 51 is sandwiched between the anode-side member 6A and the cathode-side member 6C.

The anode-side member 6A and the cathode-side member 6C sandwich the portion of the polymer electrolyte membrane 1 extending in the peripheral portion of the MEA 5. The anode-side member 6A and the cathode-side member 6C are joined to each other. Therefore, the MEA component 7 has an integral structure.

The anode-side member 6A and the cathode-side member 6C are made of a thermoplastic elastic material such as Santoprene 8101-55 (produced by Advanced Elastomer System Co., Ltd).

As shown in Fig. 14, the anode-side member 6A has an inner surface of a planar shape in which the capillary structure region 62 and the MEA peripheral portion region 61 are formed to be recessed with a depth which is substantially equal to their thickness or a half of their thickness.

The cathode-side member 6C has an inner surface of a planar shape to allow the cathode-side member 6C to be joined to the anode-side member 6A so as to sandwich the capillary structure 51 accommodated in the capillary structure region 62 and the peripheral portion of the polymer electrolyte membrane 1 disposed in the MEA peripheral portion region 61 therebetween.

The MEA component of the alternative example 1 is manufactured according to a method described below.

In a first step, the anode-side member 6A is manufactured by injection molding using upper and lower dies (not shown). The upper die has convex portions corresponding to the capillary structure region 62 and the MEA peripheral portion region 61. Thereby, as shown in Fig. 14, the anode-side member 6A has the inner surface of the planar shape in which the capillary structure region 62 and the MEA peripheral portion region 61 are formed to be recessed with a depth which is substantially equal to their thickness or a half of their thickness.

In a second step, the upper die is removed, and the peripheral portion of the polymer electrolyte membrane 1 is disposed in the MEA peripheral portion region 61 of the anode-side member 6A, and the capillary structure 51 is disposed in the capillary structure region 62 of the anode-side member 6A.

In a third step, a die (not shown) having a shape of the cathode-side member 6C is joined to the upper side of the anode-side member 6A, and the cathode-side member 6C is formed by injection molding. In this case, because of heat and a pressure in injection molding, the cathode-side member 6C is thermocompression-bonded to the anode-side member 6A, the capillary structure 51 and the polymer electrolyte membrane 1. That is, the MEA component 7 is integrated.

Suitably, films are joined to both main surfaces of the capillary structure 51 except for the evaporation portions 7A and 7C. Since entry of the thermoplastic elastic material into the capillary structure 51 during injection molding for the anode-side member 6A or the cathode-side member 6C is prevented, degradation of water suction capability of the capillary structure 51 which may be caused by entry of a part of the thermoplastic elastic material into the capillary structure 51 can be prevented.

The above series of steps, i.e., the first to three steps can be carried out successively inside a single forming apparatus by using a slide die or a rotational die. This makes it possible to further simplify the steps and to further improve the mass productivity of the MEA 1.

Finally, the catalyst layers 2A and 2C, and the gas diffusion layers 4A and 4C are formed on the portion of the polymer electrolyte membrane 1 which is within the opening 6W, thus manufacturing the MEA 5.

### (Embodiment 4)

A fourth embodiment is different only in the planar shape of the MEA component 7 from the first embodiment. The other configuration is identical to that of the first embodiment, and therefore a difference in the planar shape of the MEA component 7 between the fourth embodiment and the first embodiment will be described.

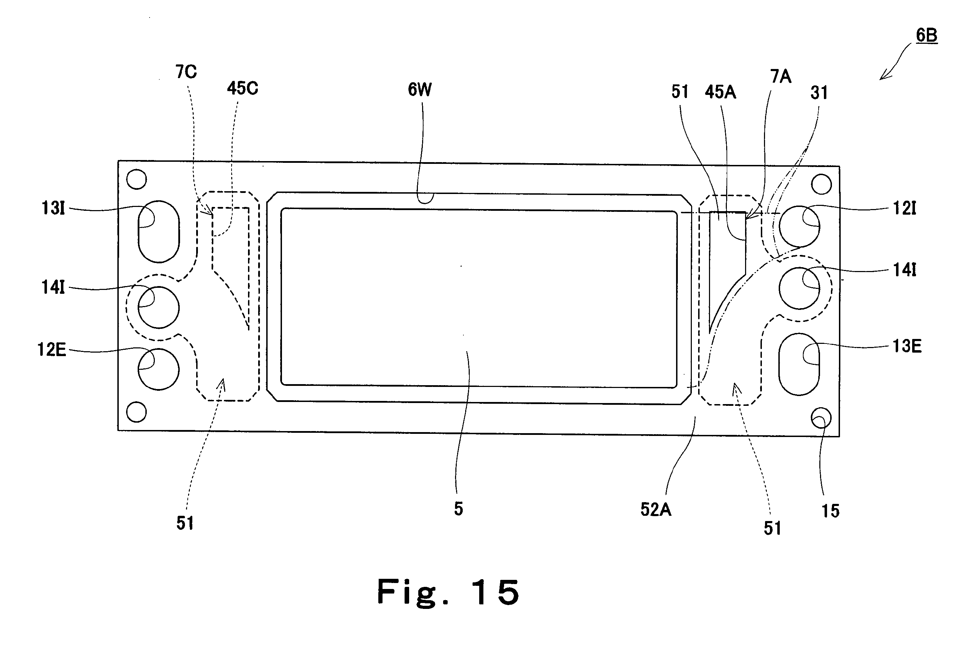

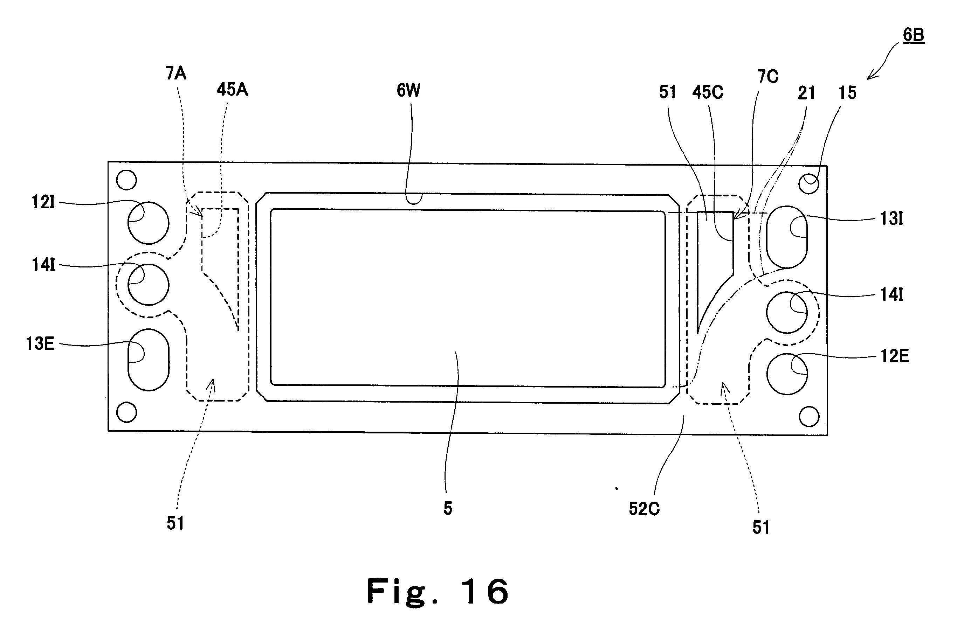

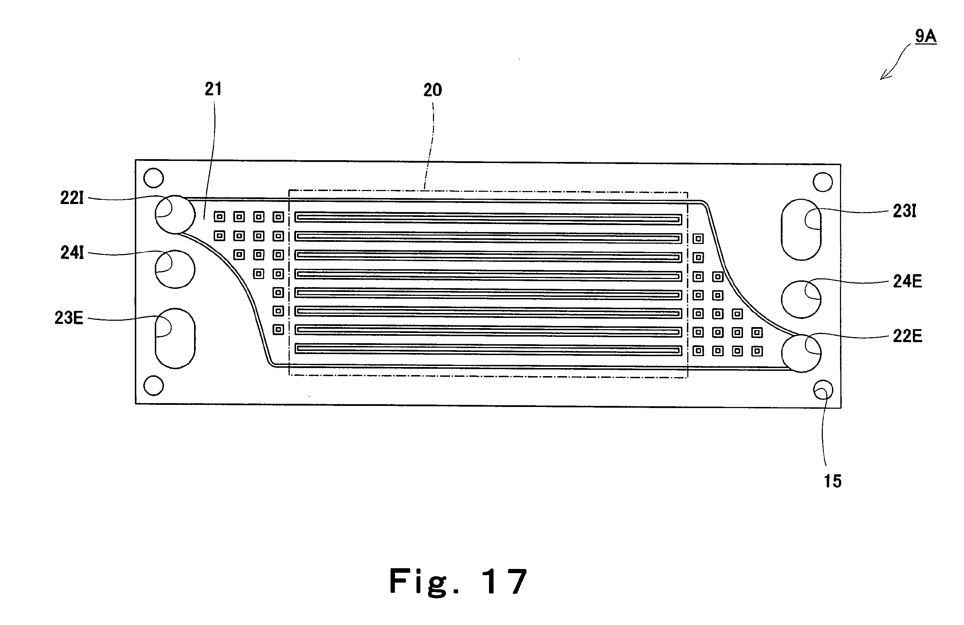

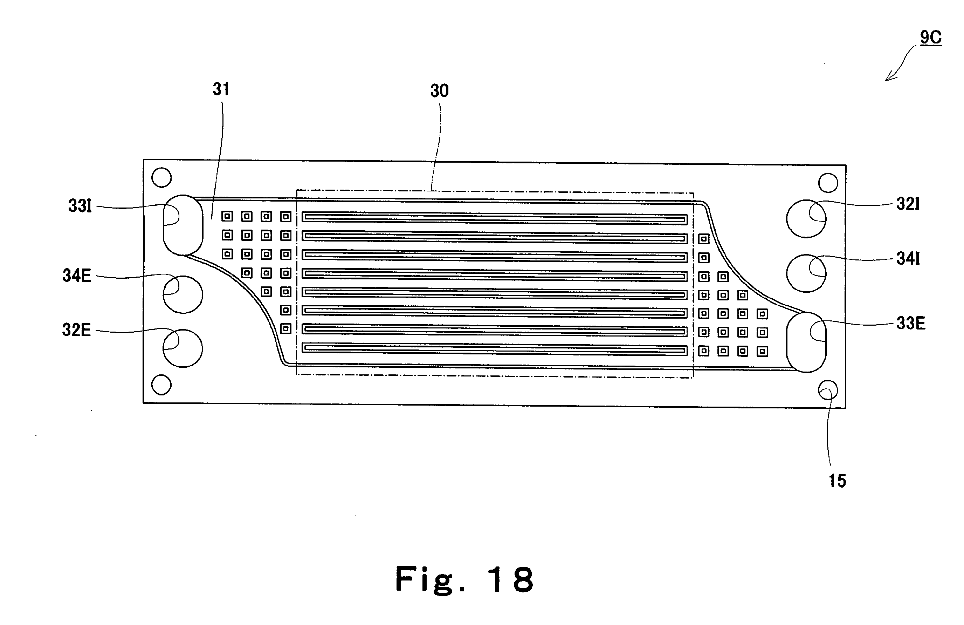

Fig. 15 is a plan view of a center member according to the fourth embodiment, as viewed from the anode separator side. Fig. 16 is a plan view of the center member of Fig. 15 as viewed from the cathode separator side. Fig. 17 is a plan view showing an inner surface of an anode separator according to the fourth embodiment. Fig. 18 is a plan view showing an inner surface of a cathode separator according to the fourth embodiment. In Figs. 15 to 18, the same references as those in Figs. 1 through 9 are used to denote the same or corresponding components.

As shown in Figs. 15 to 18, the anode gas supply manifold holes 12I, 22I, and 32I, the anode gas discharge manifold holes 12E, 22E, and 32E, the cathode gas supply manifold holes 13I, 23I, and 33I, the cathode gas discharge manifold holes 13E, 23E, and 33E, the cooling water supply manifold holes 14I, 24I, and 34I, and the cooling water discharge manifold holes 14E, 24E, and 34E are provided in regions at both sides of the opening 6W. The anode gas and the cathode gas are configured to flow in an opposing manner with respect to the MEA 5 which is a separating film. To be specific, the anode gas supply manifold holes 12I, 22I, and 32I, and the cathode gas discharge manifold holes 13E, 23E, and 33E are located on one side of the opening 6W, while the anode gas discharge manifold holes 12E, 22E, and 32E, and the cathode gas supply manifold holes 13I, 23I, and 33I are located on the other side of the opening 6W.

As shown in Figs. 15 and 16, in the center member 6B of the MEA component 7, the capillary structure 51 is disposed between these manifold holes and the opening 6W. As shown in Figs. 15 and 17, the anode-side evaporation portion 7A is formed in a region between the anode gas supply manifold hole 12I and the MEA 5, with which the anode gas passage groove 21 of the anode gas separator 9A is configured to make contact. In the same manner, as shown in Figs. 16 and 18, the cathode-side evaporation portion 7C is formed in a region between the cathode gas supply manifold hole 13I and the MEA 5, with which the cathode gas passage groove 31 of the cathode gas separator 9C is configured to make contact.

As shown in Figs. 17 and 18, in the anode separator 9A, the anode gas passage grooves 21 are formed to have a grid shape and a sector form having a width increasing toward a side end of the MEA contact region 20 in a plan view in a portion between the anode gas supply manifold 22I and the MEA contact region 20, while in the cathode separator 9C, the anode gas passage grooves 31 are formed to have a grid shape and a sector form having a width increasing toward a side end of the MEA contact region 30 in a portion between the cathode gas supply manifold 33I and the MEA contact region 30. In the MEA contact region 20, a plurality of passage grooves are arranged in parallel to connect the side ends of the MEA contact region 20, while in the MEA contact region 30, a plurality of passage grooves are arranged in parallel to connect the side ends of the MEA contact region 30. In a portion extending from the MEA contact region 20 to the anode gas discharge manifold 22E and a portion extending from the MEA contact region 30 to the cathode gas discharge manifold 33E, grid-shaped passage grooves are formed. In these portions, the passage grooves are formed in a sector form having a width decreasing toward the anode gas discharge manifold 22E and the cathode gas discharge manifold 33E in a plan view.

Thereby, in the assembled state of the cell 10, the evaporation portion 7A is in contact with the portion of the anode gas passage groove 21 extending from the anode gas supply manifold 22I to the MEA contact region 20, while the evaporation portion 7C is in contact with the portion of the cathode gas passage groove 31 extending from the cathode gas supply manifold 33I to the MEA contact region 30. Thus, as in the first embodiment, the anode gas and the cathode gas can be humidified and heated.

As described in the first to fourth embodiments, the MEA component 7 of the present invention has a configuration in which the water suction portion for suctioning the water is formed in at least one of the hole wall of the cooling water supply manifold hole 14I and the hole wall of the cooling water discharge manifold hole 14E in the frame member 6, the water evaporation portion 7A or 7C for evaporating the water is formed in at least one of the surface of the frame member 6 on the cathode separator 9C side and the surface of the frame member 6 on the anode separator 9A side, and the capillary structure 51 is embedded in the frame member 6 to connect the water suction portion 14I or 14E to the evaporation portion 7A or 7C, respectively. With such a structure, since the water in the cooling water supply manifold hole 14I and/or the cooling water discharge manifold hole 14E flows within the frame member 6 by the capillary action of the capillary structure 51 and the water in the capillary structure 51 is heated by the reaction heat generated in the MEA 5, the water is evaporated on the surface on the anode separator 9A side and/or on the surface of the cathode separator 9C side. Therefore, the MEA component is able to suction, transport, and evaporate the water.

In addition, since the evaporation portions 7A and 7C can be provided without a need to increase the surface portion of the frame member of the conventional MEA component, the MEA component 7 can be configured compactly.

Furthermore, the MEA component 7 is applicable to separators made of various kind of material, in addition to the metal-made separators, and the like. Therefore, the PEFC of the present invention is able to humidify and heat the anode gas and/or the cathode gas using the separators made of any kind of material and to configure the PEFC main body more compactly.

Since the metal-made separators are made thinner than the separators made of other materials, the PEFC main body can be configured more compactly by using the metal-made separators 9A and 9C.

In the present invention, the above described embodiments are merely exemplary, and can be altered in various ways within a scope without departing from the spirit of the present invention. That is, the present invention is not limited to the above described embodiments. By way of example, whereas in the first embodiment, the locations of the evaporation portions 21 and 31 in the MEA component 7 are determined depending on the anode gas passage grooves 21 and the cathode gas passage grooves 31, the locations of the evaporation portions 21 and 31 may be first determined and then the anode gas passage grooves 21 and the cathode gas passage grooves 31 may be formed to extend through the regions in contact with the evaporation portions 7A and 7C according to the locations of the evaporation portions 21 and 31, respectively.

Alternatively, the water suction portion and the evaporation portion of the MEA component 7 may be configured without exposing the capillary structure 51. For example, the surface of the capillary structure 51 may be covered with water permeable material, for example, a porous material, in the evaporation portions 7A and 7C, the hole wall of the cooling water supply manifold hole 14I, or the cooling water discharge manifold hole 14E. In a further alternative, the water suction portions and the evaporation portions of the MEA component 7 may be formed by filling the water permeable material in the holes 45A and 45C forming the evaporation portions 7A and 7C, respectively.

### Examples

Hereinafter, examples of the PEFC of the present invention using the stacks 99 formed using the MEA components in the first to third embodiments and a comparative example formed using the conventional MEA component will be described.

### [Example 1]

The MEA component 7 of the first embodiment was manufactured as follows.

As the MEA 5, "PRIMEA (registered mark) 5561" produced by Japan Gore Tex Co., Ltd was used. The planar areas of the electrodes including the catalyst layers 2A and 2C and the gas diffusion layers 4A and 4C were each set to 500 cm².

As the anode-side member 6A and the cathode-side member 6C, seat members made of fluorocarbon rubber were used. The holes 45A and 45C, the opening 6W, and the manifold holes 42I, 42E, 43I, 43E, 44I, and 44E were formed by punching.

As the films 52A and 52C, PEN-made films (Teonex (registered mark) Q51 produced by Teijin DuPont Co., Ltd) having a thickness 10 µ m were used.

As the seal material 53, EPDM having a viscosity adjusted properly and being diluted by a solvent was used. The MEA component 7 was subjected to thermal treatment at 150°C to harden the EPDM.

The capillary structure 51 was formed in such a manner that an non-woven fabric (trial model produced by Japan Vilene Co., Ltd) which is formed by polyacrlyronitrile (PAN) fibers with a diameter of 3 µ m and has a thickness of 30 µ was cut to have a specified shape.

This MEA component 7 and the separators 9A and 9C were assembled into the stack 99, and a power generation operation was carried out.

The separators 9A and 9C were formed by press forming of a PEFC corrosion-proof high electric conductive stainless plate (trial model produced by Sumitomo Metals Co., Ltd.).

The stack 99 was formed by stacking 400 pieces of cells 10.

To the stack 99, a dry hydrogen gas was supplied as the anode gas at a flow rate of 1,000 liter/min. and a dry air was supplied as the cathode gas at a flow rate of 5,000 liter/min. at an atmospheric temperature without preheating these gases. The cooling water was supplied to the stack 99 at a flow rate of 189 liter/min. at a temperature of 70°C. The power generation operation was carried out under the condition in which a voltage per cell was 0.65V and a current density was 0.8A/cm². In other words, the stack 99 was caused to carry out the power generation operation at an electric power output of (0.65 × 400) × (0.8 × 500) = 104, 000W.

As a result, the temperature of the cooling water discharged from the stack 99 was 73.2°C.

The power generation operation was continued for 5000 hours. As a result, a decrease rate of the output voltage of the stack 99 was 1.5mV per 1000 hours. Degradation of a power generation capability which may be caused by insufficient humidification was not observed.

### [Example 2]

The MEA component which has the same structure as the MEA component of the example 1 except that the cathode-side evaporation portion 7C is not formed, i.e., the MEA component of the second embodiment was manufactured. This MEA component and the separators 9A and 9C identical to those of the example 1 were assembled into the stack, and the power generation operation was carried out as in the example 1. Since the MEA component of the example 2 was incapable of humidifying and heating the cathode gas, the air as the cathode gas was humidified and heated to have a dew point of 72°C and supplied.

As a result, the temperature of the cooling water discharged from the stack 99 was 78.9°C.

### [Example 3]

The MEA component which has the same structure as the MEA component of the example 1 except that the anode-side evaporation portion 7A is not formed, i.e., the MEA component of the third embodiment was manufactured. This MEA component and the separators 9A and 9C identical to those in the example 1 were assembled into the stack, and the power generation operation was carried out as in the example 1. Since the MEA component of the example 3 was incapable of humidifying and heating the anode gas, the hydrogen gas as the anode gas was humidified and heated to have a dew point of 72°C and supplied.

As a result, the temperature of the cooling water discharged from the stack 99 was 74.2°C.

### [Comparative Example]

The MEA component having the same structure as that of the example 1 except that the evaporation portions 7A and 7C of the anode-side member 6A and the cathode-side member 6C are not formed and only the seal material 53 is embedded between the films 52A and 52C without embedding the wick 51 i.e., the MEA component having the same structure as that of the conventional MEA component was manufactured. This MEA component and the separators 9A and 9C identical to those in the example 1 were assembled into the stack, and the power generation operation was carried out as in the example 1. Since the MEA component of the comparative example was incapable of humidifying and heating the anode gas and the cathode gas, the hydrogen gas as the anode gas and the air as the cathode gas were each humidified and heated to have a dew point of 72°C and supplied.

As a result, the temperature of the cooling water discharged from the stack was 80°C .

From the results of the example 2 and the comparative example, the humidified state of the anode gas can be verified. To be specific, a temperature difference Δ T₂ = 80 - 78.9 = 1.1°C between the temperature of the discharged cooling water in the example 2 and the temperature of the discharged cooling water in the comparative example occurs due to a vaporization heat of the water used to humidify the anode gas. Since latent heat of the water is 2, 257 kJ/kg, the amount of water vaporized into the anode gas is 4.19J × 189kg/min. × 1.1°C /2,257 = 0.386kg/min. The volume of the steam of the amount of the water under the atmospheric pressure is 386g × 22.4 × 10⁻³/18g = 0.480m³. Since the flow rate of the anode gas is 1m³/min., a steam partial pressure in the anode gas is 1.013 × 10⁵ × 0.480 /(0.480 + 1) = 3.29 × 10⁴ Pa. It was presumed that the dew point of the anode gas was approximately 71°C by checking the steam partial pressure with a known steam partial pressure table. From this, it was found out that the anode gas was humidified substantially desirably according to the second embodiment of the present invention.

In the same manner, from the results of the example 3 and the comparative example, the humidified state of the cathode gas can be verified. Since a temperature difference Δ T₃ = 80 - 74.2 = 5.8°C between the temperature of the discharged cooling water in the example 3 and the temperature of the discharged cooling water in the comparative example, occurs, the amount of the water vaporized into the cathode gas is 4.19J × 189kg/min. ×5.8 × /2,257 = 2.04kg/min. The volume of the steam of the amount of the water under the atmospheric pressure is 2,040g × 22.4 × 10⁻³ /18g = 2.54 m³. Since the flow rate of the cathode gas is 5 m³/min., the steam partial pressure in the cathode gas is 1.013 × 10⁵ × 2.54/(2.54 + 5) = 3.41 × 10⁴ Pa. It was presumed that the dew point of the anode gas was approximately 72°C by checking the steam partial pressure with the known steam partial pressure table. From this, it was found out that the cathode gas was humidified substantially desirably according to the third embodiment of the present invention.

Furthermore, a temperature difference Δ T1 = 80 - 73.2 = 6.8°C between the temperature of the discharged cooling water in the example 1 and the temperature of the discharged cooling water in the comparative example, occurs, and a relationship Δ T1 ≈ Δ T2 + Δ T3 is established. That is, it was presumed that the humidification capability in the example 2 and the humidification capability in the example 3 were substantially achieved.

### Industrial Applicability

An MEA component of the present invention is useful as the MEA component which is capable of suctioning, transporting, and evaporating water, and of being configured compactly.

In addition, a PEFC of the present invention is useful as a PEFC which is capable of humidifying and heating an anode gas and/or a cathode gas using separators made of any kind of material, and of configuring a main body of a polymer electrolyte fuel cell compactly.

## Claims

1. An MEA component comprising:
an MEA; and
a plate-shaped frame member which is configured to retain a portion of a polymer electrolyte membrane extending in a peripheral portion of said MEA to dispose a portion of said MEA within an inner periphery of said frame member, said frame member being provided with an anode gas supply manifold hole, a cathode gas supply manifold hole, a cooling water supply manifold hole, an anode gas discharge manifold hole, a cathode gas discharge manifold hole, and a cooling water discharge manifold hole which penetrate said frame member in a thickness direction thereof;
wherein water suction portion for suctioning water is provided in at least one of a hole wall of the cooling water supply manifold hole of said frame member and a hole wall of the cooling water discharge manifold hole of said frame member, an evaporation portion for evaporating water is provided on at least one of main surfaces of the frame member, and a capillary structure is embedded in said frame member to connect the water suction portion to the evaporation portion.

2. The MEA component according to claim 1, wherein the capillary structure is exposed outside so as to form the water suction portion and the evaporation portion.

3. The MEA component according to claim 1, wherein the evaporation portion is located closer to said MEA than the cooling water supply manifold hole and the cooling water discharge manifold hole.

4. The MEA component according to claim 2, further comprising:
a center member including a pair of frame-shaped films arranged in parallel, a portion of the MEA which is disposed within an inner periphery of the pair of films with a peripheral portion of the polymer electrolyte membrane sandwiched between the pair of films, the capillary structure sandwiched between the pair of films, and a seal material disposed between the pair of films so as to surround the peripheral portion of the polymer electrolyte membrane and the capillary structure, and so as to integrate the peripheral portion of the polymer electrolyte membrane, the capillary structure and the pair of films;
a frame-shaped anode-side member which is stacked on a film of one of main surfaces of said center member; and
a frame-shaped cathode-side member which is stacked on a film of the other main surface of said center member.

5. The MEA component according to claim 3, wherein
said center member, said anode-side member, and said cathode-side member are separate members, and are stacked to form a polymer electrolyte fuel cell.

6. A polymer electrolyte fuel cell comprising:
an MEA component according to claim 1; and
one more cells stacked, the cell including an anode separator and a cathode separator which sandwich said MEA component;
wherein the anode separator has an anode gas supply manifold hole, a cathode gas supply manifold hole, a cooling water supply manifold hole, an anode gas discharge manifold hole, a cathode gas discharge manifold hole, and a cooling water discharge manifold hole in locations respectively corresponding to an anode gas supply manifold hole, a cathode gas supply manifold hole, a cooling water supply manifold hole, an anode gas discharge manifold hole, a cathode gas discharge manifold hole, and a cooling water discharge manifold hole in said MEA, the anode separator having on an inner surface thereof an anode gas passage groove connecting the anode gas supply manifold hole to the anode gas discharge manifold hole;
wherein the cathode separator has an anode gas supply manifold hole, a cathode gas supply manifold hole, a cooling water supply manifold hole, an anode gas discharge manifold hole, a cathode gas discharge manifold hole, and a cooling water discharge manifold hole in locations respectively corresponding to an anode gas supply manifold hole, a cathode gas supply manifold hole, a cooling water supply manifold hole, an anode gas discharge manifold hole, a cathode gas discharge manifold hole, and a cooling water discharge manifold hole in said MEA, the cathode separator having on an inner surface thereof a cathode gas passage groove connecting the cathode gas supply manifold hole to the cathode gas discharge manifold hole;
and wherein at least one of the anode gas passage groove and the cathode gas passage groove is configured to contact the evaporation portion of said MEA.

7. The polymer electrolyte fuel cell according to claim 5, wherein the anode separator and the cathode separator are made of metal.
